# DEMANDE DE BREVET EUROPEEN

(11) **EP 1 535 793 A1**
(43) Date de publication de la demande: **01.06.2005**
(21) Numéro de dépôt: 04300772.3
(22) Date de dépôt: 09.11.2004
(51) Int. Cl.: B60N 2/46

(54) **Module d'accessoires amovible pour véhicule automobile**

(30) Priorité: 24.11.2003 FR 0313724
(71) Demandeur: Renault s.a.s., 92100 Boulogne Billancourt (FR)
(72) Inventeur: Leclerc, Jean Philippe, 28130 Houx (FR); Perez, Jean Claude, 78450 Villepreux (FR); Garnault, Michel, 75020 Paris (FR)

(57) **Abrégé**

L'invention concerne un module d'accessoires amovible (8) pour véhicule automobile pourvu de sièges ou banquette(s) équipés de fixations (7) pour ceinture de sécurité, comprenant au moins un premier point d'ancrage (18) apte à être fixé dans une fixation destinée à une ceinture de sécurité (7).

L'invention concerne également un siège ou banquette de véhicule automobile comprenant au moins une fixation pour ceinture de sécurité (7), et comprenant à distance de sa fixation pour ceinture de sécurité (7) au moins un moyen d'ancrage (20) apte à coopérer avec un deuxième point d'ancrage d'un module amovible selon l'invention.

L'invention concerne encore un véhicule automobile comprenant au moins un module amovible (8) selon l'invention et pouvant intégrer ledit au moins un module (8) à une console centrale, au véhicule, ou entre des sièges, lorsqu'il n'est pas utilisé sur les sièges ou banquette(s).

## Description

L'invention concerne un module d'accessoires amovible pour véhicule automobile apte à être fixé en utilisant une fixation de ceinture de sécurité. L'invention concerne également un siège ou une banquette pouvant recevoir ledit module ainsi qu'un véhicule automobile pouvant intégrer un tel module.

Par module d'accessoires, on entend un module pouvant supporter un ou plusieurs types d'accessoires pour le véhicule, par exemple des branchements électriques pour appareils divers, des supports pour bouteilles, verres ou similaires, des rangements divers, une surface de travail ou de divertissement, ou pouvant former, le cas échéant un accoudoir ou similaire.

Il existe déjà des modules amovibles pour véhicule automobile qui servent par exemple de surface de travail ou d'accoudoir.

Ainsi, le document US-5 542 589 concerne une structure formant bureau amovible qui peut être fixée sur un siège en utilisant la ceinture de sécurité de ce dernier. La ceinture de sécurité doit être passée dans une rainure prévue à cet effet de la structure. Pour une meilleure stabilisation, un bras rigide vient crocheter le dessus d'un accoudoir replié contre le dossier. Cette structure présente l'inconvénient d'être assez longue et compliquée à installer et nécessite la réalisation de pièces de forme particulière pour sa fixation.

Le document GB-2 331 453 décrit des accoudoirs amovibles pouvant être fixés sur un siège au moyen d'une sangle et d'un dispositif de maintien. Ce dernier vient s'emboîter sur les côtés du dossier du siège et est maintenu en place au moyen de la sangle qui passe derrière le dossier et d'une barre qui vient devant le dossier entre le dossier et l'assise. Les accoudoirs sont montés rotation sur le dispositif. Ce système présente l'inconvénient de nécessiter de nombreuses pièces à monter. Par ailleurs, la longueur de la sangle doit être réglée pour chaque siège différent, de même que la longueur de la barre.

L'invention vise à pallier ces inconvénients en proposant un module d'accessoires qui peut être facilement et rapidement fixe sur n'importe quel siège ou banquette de véhicule automobile possédant une fixation pour une ceinture de sécurité.

A cet effet, l'objet de l'invention concerne un module d'accessoires amovible pour véhicule automobile pourvu de sièges ou banquette (s) équipés de fixations pour ceinture de sécurité, caractérisé en ce qu'il comprend au moins un premier point d'ancrage apte à être fixé dans une fixation destinée à une ceinture de sécurité.

Les fixations destinées aux ceintures de sécurité sont actuellement standardisées de sorte qu'un point d'ancrage conçu pour être fixé dans une fixation pourra être utilisé dans de nombreux types de véhicules. Un tel ancrage présente l'avantage d'être simple à réaliser et d'être très simple d'utilisation.

En variante, le module comporte au moins un deuxième point d'ancrage apte à être fixé sur un autre moyen d'ancrage d'un siège ou d'une banquette. Cet autre moyen d'ancrage peut. être différent d'une fixation destinée à une ceinture de sécurité. Une meilleure stabilisation peut ainsi être obtenue.

Dans un mode de réalisation, le module est supporté par au moins trois bras de support, l'extrémité, libre de chaque bras étant pourvue de l'un desdits premier ou deuxième points d'ancrage. Le module est alors maintenu à distance de la surface du siège, par exemple pour servir de surface de travail, de divertissement, ou similaire, et/ ou d'accoudoir.

En variante, le module est supporté par au moins deux bras de support, l'extrémité de chacun des deux bras étant pourvue d'un premier point d'ancrage, les deux bras étant conçus de manière à ce que leur extrémité puisse être fixée dans deux fixations adjacentes destinées chacune à une ceinture de sécurité. Le module peut ainsi être rigidement maintenu en place. Un troisième point d'appui du module peut éventuellement être rajouté, ou bien, le module peut reposer en partie sur la surface du siège ou de la banquette.

Avantageusement, chaque bras est monté articule sur ledit module, il peut ainsi être replié le long du module lorsque celui-ci n'est pas utilisé, de manière à réduire l'encombrement global du module.

Avantageusement, le module est un compartiment de rangement avec ou sans couvercle.

Avantageusement, la partie supérieure du module forme un accoudoir.

L'invention concerne également un siège de véhicule automobile à une ou plusieurs places comprenant au moins une fixation destinée à une ceinture de sécurité, et comprenant à distance de sa fixation pour ceinture de sécurité au moins un autre moyen d'ancrage apte à coopérer avec un deuxième point d'ancrage d'un module selon l'invention.

L'invention concerne encore un véhicule automobile pourvu de sièges ou banquette(s) équipés de fixations pour ceintures de sécurité et éventuellement d'une console centrale, et comprenant, au moins un module selon l'invention, ledit au moins un module pouvant, être intégré à la console centrale ou à une partie du véhicule lorsqu'il n'est pas utilisé sur les sièges ou banquette(s). Le module peut ainsi être facilement rangé dans la console ou dans le plancher ou le coffre, et n'encombre pas l'espace intérieur du véhicule.

L'invention concerne encore un véhicule pourvu de sièges ou banquette(s) équipés de fixations pour ceintures de sécurité, comprenant au moins un module selon l'invention, ledit au moins un module pouvant être intégré entre deux sièges ou deux parties d'assise d'une banquette. Eventuellement, ce module peut servir d'assise.

Avantageusement, au moins une fixation pour ceinture de sécurité est portée par une partie d'assise du siège ou de la banquette mobile en direction d'une partie d'assise adjacente.

De préférence, au moins deux fixations pour ceinture de sécurité portées chacune par une partie d'assise du siège ou de la banquette mobile en direction d'une place centrale du siège ou de la banquette forment les moyens de fixation pour la ceinture de sécurité de la place centrale.

L'invention est maintenant décrite en référence aux dessins annexés, non limitatifs, dans lesquels :
- la figure 1 est une vue en perspective d'une banquette pourvue d'un module selon l'invention ;
- la figure 2 est une vue de côté de la banquette et du module représenté figure 1 et montrant un point d'ancrage du module ;
- la figure 3 est une vue de détail en perspective d'un support du module représenté sur les figures 1 et 2 pourvu d'un moyen d'ancrage sur le siège.

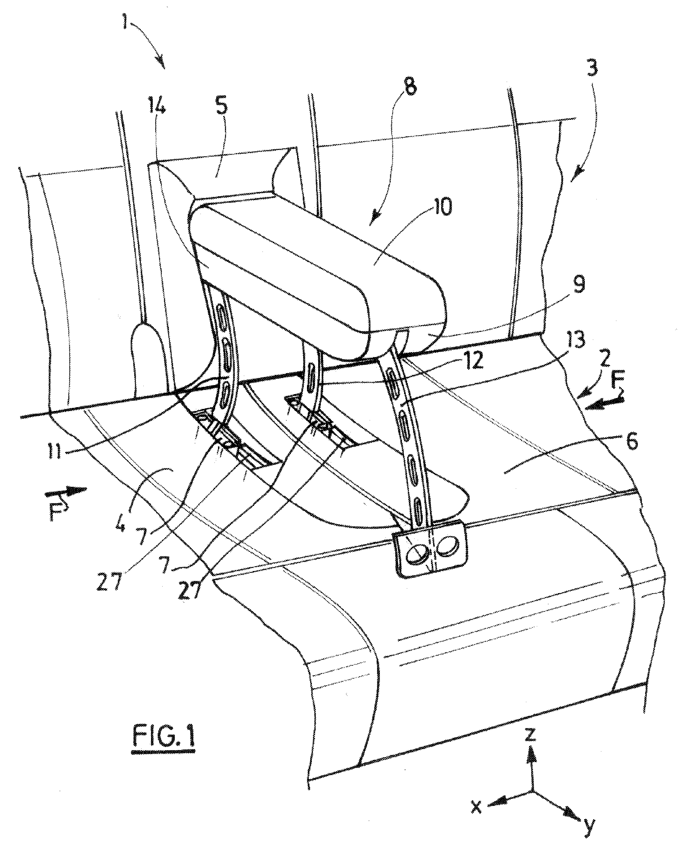

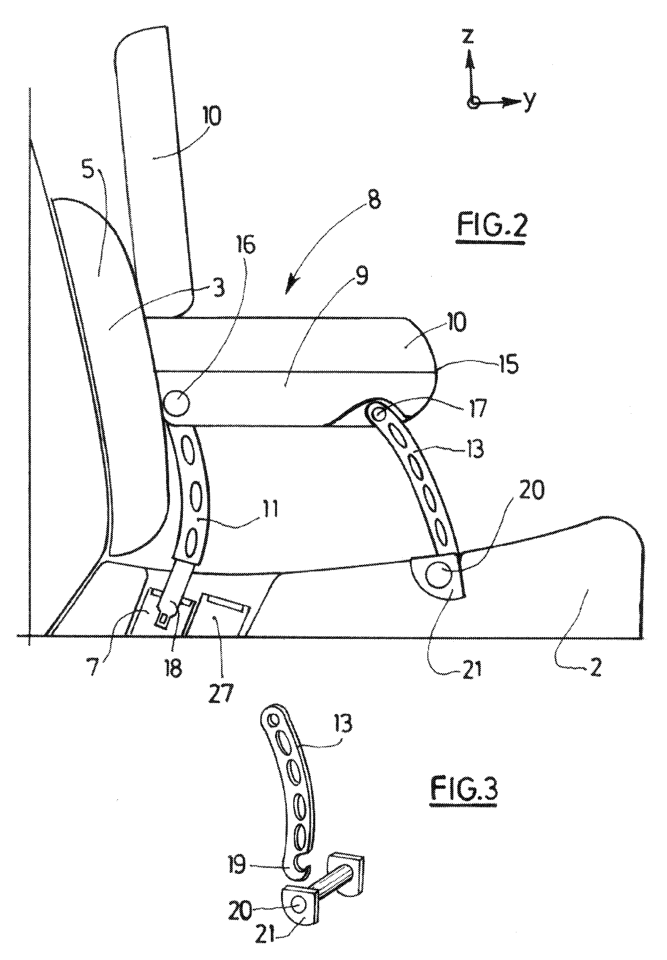

Sur les figures 1 et 2, le repère X, Y, Z correspond respectivement aux directions transversale, longitudinale et verticale du véhicule, la banquette faisant face à la direction d'avancement du véhicule.

La figure 1 représente une banquette 1 de véhicule automobile comportant. une assise 2 et un dossier 3. L'assise est divisée en trois parties adjacentes 4, 5, 6 : deux parties latérales 4 et 6 mobiles suivant la largeur de la banquette, c'est-à-dire suivant la direction transversale X du véhicule, et une partie centrale 5 qui peut être ôtée ou pivotée. Dans l'exemple, la partie centrale 5 peut être relevée et plaquée le long du dossier 3, tel que visible sur les figures 1 et 2. Cette partie peut par exemple être relice à la banquette entre le dossier et l'assise, et pivoter autour de cette liaison. La partie centrale 5 est ainsi escamotée lorsque les parties latérales 4 et 6 sont rapprochées l'une de l'autre suivant les flèches F de la figure L jusqu'à venir en contact l'une avec l'autre tel que représenté sur cette même figure.

L'assise 3 est pourvue de fixations destinées à des ceintures de sécurité 7, 27. Il s'agit par exemple de fourreaux 7, 27 aptes à recevoir le point d'ancrage d'une ceinture de sécurité standard. De manière connue, un tel point d'ancrage se présente par exemple sous la forme d'une plaque présentant une extrémité rectangulaire percée d'un orifice rectangulaire.

Sur les figures 1 et 2, on a représenté un module d'accessoires 8 comportant une partie formant, rangement 9 et un couvercle 10. Sur la figure 2, les positions ouverte et fermée du couvercle 10 sont toutes les cieux représentées. Le module présente une forme sensiblement. parallélépipédique. La partie formant rangement 9 du module est supportée par trois bras 11, 12, 13. Deux bras 11, et 12 sont fixés une extrémité 14 du module de part et d'autre de celui-ci sur ses faces latérales de grande longueur. L'autre bras 13 est fixé à l'extrémité opposée 15 du module, sensiblement au milieu de sa face d'extrémité. Les deux bras 11 et 12 sont montes à rotation autour d'un même axe 16, tandis que le bras 13 est monté à rotation autour d'un axe 17. Les axes 16 et 17 sont solidaires de la partie 9 du module, sont parallèles entre eux et sensiblement perpendiculaires à la direction longitudinale du module. Les extrémités libres des bras 11 et 12 sont pourvues chacune d'un point d'ancrage de type ceinture de sécurité 18, apte à étre inséré dans les fixations pour ceinture 7, tel que représenté figure 2. De préférence, les deux bras adjacents 11 et 12 sont sensiblement identiques. L'extrémité libre du troisième bras 13 est pourvue d'un autre type de point d'ancrage 19. Un exemple de ce point d'ancrage est représenté sur la figure 3, Il s'agit d'un crochet 19 apte à venir en prise avec un axe d'accrochage 20 solidaire de la banquette. De préférence, la concavité du crochet est dirigée vers l'avant du véhicule lorsque le module est fixe, de manière à améliorer la résistance aux chocs frontaux de la fixation. L'axe d'accrochage 20 est monté sur une partie fixe de rassise, par exemple par l'intermédiaire de plaques support 21.

Bien entendu, d'autres moyens de fixation pourraient être utilisés. Par exemple, l'axe d'accrochage pourrait être remplacé par une boutonnière. On pourrait envisager d'utiliser aussi une fixation de type ceinture de sécurité pour ce troisième bras.

La fixation du module 8 est réalisée de la manière suivante. Le crochet. 19 est crocheté sur l'axe 20, puis les points d'ancrage 18 sont introduits et bloqués dans les fixations pour ceinture 7. Pour démonter le module, on détache les points d'ancrage 18, puis le crochet 19. Les bras peuvent ensuite être repliés sous le module de sorte que l'encombrement de ce dernier est réduit.

Dans l'exemple, la fixation du module par ses points d'ancrage 18, 19 permet en outre de maintenir la partie centrale d'assise 5 en position relevée contre le dossier, le module empêchant la rotation de cette partie 5. Lorsque la partie centrale d'assise est en position d'utilisation, deux fixations pour ceinture de sécurité 7, solidaires des parties d'assise latérales 4 et 6 sont disposées de part et d'autre de la partie 5. Elles sont alors utilisées pour fixer une ceinture de sécurité à la place centrale. Deux autres fixations pour ceinture de sécurité 27, également solidaires des parties latérales d'assise 4 et 6 sont utilisées pour la fixation des ceintures des places d'assises 4 et 6. Dans la position de la banquette, dans laquelle les parties latérales d'assise 4 et 6 sont rapprochées, ces mêmes fixations pour ceinture 7 sont libres, la place centrale n'existant plus. Les fixations 7 sont alors disponibles et adjacentes. Leur position adjacente permet de les utiliser pour la fixation du module de l'exemple, et plus précisément pour la fixation des deux bras 11, 12. De préférence, le montage à rotation des bras 11 et 12 sur l'axe 16 est réalisé afin de permettre d'écarter ou de rapprocher légèrement les extrémités 18 des bras la direction de l'axe 16, de sorte que le module peut être fixé même si la distance entre les deux fixations 7 varie légèrement par rapport à la distance prédéterminée prévue pour l'accrochage du module (par exemple lors du montage ou lors du rapprochement des parties d'assise). La partie supérieure du module, formée notamment par le couvercle 10, peut en outre former un accoudoir pour les places correspondant aux parties d'assise latérales 4 et 6.

Afin d'éviter le basculement du module ancré sur ses points de fixation par rotation des bras 11, 12 et 13 autour de leurs axes respectifs 16 et 17, de préférence, le module est conçu de sorte que, en position fixée, les points d'ancrage soient décalés vers l'extérieur du module suivant, la direction longitudinale de celui-ci (direction Y sur les figures 1 et 2) par rapport aux axes 16, 17. Ainsi, dans l'exemple, le point d'ancrage 19 est situé en avant de l'axe 17, c'est-à-dire vers l'avant de la banquette suivant direction longitudinale Y du véhicule (figure 2).

Lorsque le module n'est pas en service, ses bras 11, 12, 13 peuvent être repliés sous lui par rotation autour de leurs axes respectifs 16, 17, permettant, d'obtenir un module compact qui peut être facilement rangé.

La forme du module peut être choisie de manière à intégrer ou encastrer le module dans toute partie du véhicule, dans le coffre ou dans l'habitacle. De préférence le module peut être intégré dans une console centrale, par exemple une console centrale placée entre les sièges avant du véhicule.

Le module peut également être conçu pour venir combler, au moins partiellement, l'espace entre les parties latérales d'assise 4 et 6 lorsque ces dernières sont écartées. La partie centrale d'assise 5 peut alors être de dimension réduite, voire inexistante, ou présenter une cavité dans laquelle le module peut être encastré, ou encore, le module peut être rangé dans un espace ménagé sous la partie centrale d'assise 5.

Le module peut. avoir de nombreuses autres utilisations. Il peut servir par exemple de bureau de travail, de table pour manger, jouer, écrire, de support pour des composants alimentés en électricité (téléphone, radio ...,) l'un des pieds support pouvant alors être utilisé pour faire passer l'alimentation en courant électrique.

Bien entendu, le module peut ne pas présenter de pieds supports et être pose directement sur l'assise du siège, les points d'ancrage 18, 19 étant montés directement sur le module, ou présenter plus de trois pieds.

## Revendications

1. Module d'accessoires amovible (8) pour véhicule automobile pourvu de sièges ou banquette(s) (1) équipés de fixations (7) pour ceinture de sécurité, **caractérisé en ce qu'**il comprend au moins un premier point d'ancrage (18) apte à être fixé dans une fixation destinée à une ceinture de sécurité (7).

2. Module selon la revendication 1, **caractérisé en ce qu'**il comporte au moins un deuxième point d'ancrage (19) apte à être fixé sur un autre moyen d'ancrage (20) d'un siège ou d'une banquette (1).

3. Module selon la revendication 1 ou 2, **caractérisé en ce qu'**il est supporté par au moins trois bras de support (11, 12, 13), l'extrémité libre de chaque bras étant pourvue de l'un desdits premier (18) ou deuxième (19) points d'ancrage.

4. Module selon l'une des revendications 1 à 3, **caractérisé en ce qu'**il est supporté par au moins deux bras de support (11, 12), l'extrémité de chacun des deux bras étant pourvue d'un premier point d'ancrage (18), les deux bras étant, conçus de manière à ce que leur extrémité puisse être fixée dans deux fixations adjacentes (7) destinées chacune à une ceinture de sécurité.

5. Module selon la revendication 3 ou 4, **caractérisé en ce que** chaque bras (11, 12, 13) est monté articulé sur ledit module.

6. Module selon l'une des revendications précédentes, **caractérisé en ce qu'**il forme un compartiment de rangement (9) avec ou sans couvercle (10).

7. Module selon l'une des revendications précédentes, **caractérise en ce que** sa partie supérieure forme un accoudoir.

8. Siège de véhicule automobile à une ou plusieurs places comprenant au moins une fixation destinée à une ceinture de sécurité (7), **caractérisé en ce qu'**il comprend à distance de sa fixation pour ceinture de sécurité (7) au moins un autre moyen d'ancrage (20) apte à coopérer avec un deuxième point d'ancrage (18, 19) d'un module d'accessoires amovible (8) selon l'une des revendications 1 à 7.

9. Véhicule automobile pourvu de sièges ou banquette(s) équipés de fixations pour ceintures de sécurité (7) et éventuellement d'une console centrale, **caractérisé en ce qu'**il comprend au moins un module d'accessoires amovible (8) selon l'une des revendications 1 à 7 et **en ce que** ledit au moins un module (8) peut être intégré à la console centrale ou au véhicule lorsque n'est pas utilise sur les sièges ou banquette(s).

10. Véhicule pourvu de sièges ou banquette(s) équipés de fixations pour ceintures de sécurité (7), **caractérisé en ce qu'**il comprend au moins un module d'accessoires amovible (8) selon l'une des revendications 1 à 7 et **en ce que** ledit au moins un module (8) peut être intégré entre deux sièges ou deux parties d'assise d'une banquette.

11. Véhicule selon la revendication 9 ou 10, **caractérisé en ce qu'**au moins une fixation pour ceinture de sécurité (7) est portée par une partie d'assise du siège ou de la banquette mobile en direction d'une partie d'assise adjacente.

12. Véhicule selon la revendication 10, **caractérisé en ce qu'**au moins deux fixations pour ceinture de sécurité (7) portées chacune par une partie d'assise du siège ou de la banquette mobile en direction d'une place centrale du siège ou de la banquette forment les moyens de fixation pour la ceinture de sécurité de la place centrale.
